(19) Europäisches Patentamt
European Patent Office
Office européen des brevets

(11) **EP 4 597 869 A1**

(12) **EUROPEAN PATENT APPLICATION**
published in accordance with Art. 153(4) EPC

(43) Date of publication:
06.08.2025 Bulletin 2025/32

(21) Application number: 23873127.7

(22) Date of filing: 26.09.2023

(51) International Patent Classification (IPC):
**H04B 7/06** (2006.01)     **H04B 17/336** (2015.01)
**G06N 20/00** (2019.01)

(52) Cooperative Patent Classification (CPC):
**G06N 20/00; H04B 7/06; H04B 17/336**

(86) International application number:
**PCT/KR2023/014861**

(87) International publication number:
**WO 2024/072015 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 29.09.2022 KR 20220124674

(71) Applicant: **LG Electronics Inc.**
**Yeongdeungpo-gu**
**Seoul 07336 (KR)**

(72) Inventors:
• **PARK, Haewook**
  **Seoul 06772 (KR)**
• **KIM, Kijun**
  **Seoul 06772 (KR)**
• **KANG, Jiwon**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING AND RECEIVING SIGNAL IN WIRELESS COMMUNICATION SYSTEM**

(57)     A method for reporting a channel state by a terminal in a wireless communication system according to at least one of embodiments disclosed in the present specification may comprise: receiving a channel state information (CSI)-related configuration; performing multiple interconnected CSI measurements on the basis of the CSI-related configuration; and transmitting a CSI report on the basis of the CSI measurements, wherein the multiple interconnected CSI measurements include a first CSI measurement performed on the basis of an artificial intelligence/machine learning (AI/ML) model and a second CSI measurement performed without the AI/ML model, and the CSI report includes an output of the AI/ML model obtained through the first CSI measurement and channel quality indicator (CQI) information obtained through the second CSI measurement.

**FIG. 20**

Receive CSI-related configuration — A05

Perform CSI measurements associated with each other — A10

Transmit a CSI report — A15

EP 4 597 869 A1

**Description**

**TECHNICAL FIELD**

The disclosure relates to a wireless communication system, and more particularly, to a method and apparatus for transmitting/receiving an uplink/downlink wireless signal in a wireless communication system.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

An object of the disclosure is to provide a method of efficiently performing wireless signal transmission/reception procedures and an apparatus therefor.
It will be appreciated by persons skilled in the art that the objects that could be achieved with the disclosure are not limited to what has been particularly described hereinabove and the above and other objects that the disclosure could achieve will be more clearly understood from the following detailed description.

**TECHNICAL SOLUTION**

According to an aspect, a method of reporting a channel state by a user equipment (UE) in a wireless communication system may include receiving a channel state information (CSI)-related configuration, performing, based on the CSI-related configuration, a plurality of CSI measurements associated with each other, and transmitting a CSI report based on the CSI measurements. The plurality of associated CSI measurements may include a first CSI measurement performed based on an artificial intelligence/machine learning (AI/ML) model and a second CSI measurement performed without the AI/ML model, and the CSI report may include an output of the AI/ML model obtained from the first CSI measurement and channel quality indicator (CQI) information obtained from the second CSI measurement.
The CQI information may include a second CQI value obtained by applying a CQI offset to a first CQI value calculated from the second CSI measurement.
The CQI offset may be provided through network signaling.
Based on the first CSI measurement being triggered, the second CQI measurement associated with the first CSI measurement may be performed together with the first CSI measurement.
The first CSI measurement and the second CSI measurement may be performed respectively in a first CSI resource and a second CSI resource that are associated with each other.
The CSI configuration may include information for association of the first CSI resource and the second CSI resource.
A first CSI report including the output of the AI/ML model obtained from the first CSI measurement may be transmitted through a physical uplink shared channel (PUSCH).
A second CSI report including the CQI information obtained from the second CSI measurement may be transmitted through a physical uplink control channel (PUCCH).
The CSI report may be transmitted through one physical uplink channel.
The output of the AI/ML model configured for the UE may be provided as an input of an AI/ML model configured in a network.
The plurality of associated CSI measurements may be counted as N CSI processes, and N may be a value equal to or greater than 1 and may be provided through network signaling.
According to another aspect, a processor-readable recording medium recording a program for performing the above-described method of reporting a channel state may be provided.
According to another aspect, a UE for performing the above-described method of reporting a channel state may be provided.

According to another aspect, a processing device for controlling a UE performing the above-described method of reporting a channel state may be provided.

According to another aspect, a method of receiving a channel state report by a base station (BS) in a wireless communication system may include transmitting a CSI-related configuration, and receiving, based on the CSI-related configuration, a plurality of CSI measurements associated with each other. The plurality of associated CSI measurements may include a first CSI measurement performed based on an AI/ML model and a second CSI measurement performed without the AI/ML model, and the CSI report may include an output of the AI/ML model obtained from the first CSI measurement and CQI information obtained from the second CSI measurement.

According to another aspect, a processor-readable recording medium recording a program for performing the above-described method of receiving a channel state report may be provided.

According to another aspect, a BS for performing the above-described method of receiving a channel state report may be provided.

## ADVANTAGEOUS EFFECTS

According to the disclosure, wireless signal transmission and reception may be efficiently performed in a wireless communication system.

It will be appreciated by people skilled in the art that the effects that can be achieved with the disclosure are not limited to what has been particularly described hereinabove and other advantages of the disclosure will be more clearly understood from the following detailed description taken in conjunction with the accompanying drawings.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink shared channel (PDSCH) and ACK/NACK transmission and reception process.

FIG. 6 illustrates an exemplary physical uplink shared channel (PUSCH) transmission process.

FIG. 7 shows an example of a channel state information (CSI) related procedure.

FIG. 8 is a view for explaining a concept of artificial intelligence/machine learning (AI/ML)/deep learning.

FIGS. 9 to 12 show various AI/ML models of deep learning.

FIG. 13 is a diagram illustrating split AI inference.

FIG. 14 is a diagram illustrating a framework for 3GPP radio access network (RAN) intelligence.

FIGS. 15 to 17 illustrate AI model training and inference environments.

FIG. 18 is a diagram illustrating an AI/ML-based channel state information (CSI) feedback.

FIG. 19 is a diagram illustrating a CSI procedure according to an embodiment.

FIG. 20 is a diagram illustrating an operation of a user equipment (UE) according to an embodiment.

FIG. 21 is a diagram illustrating an operation of a base station (BS) according to an embodiment.

FIGS. 22 to 25 illustrate an example of a communication system 1 and wireless devices applied to the disclosure.

FIG. 26 illustrates an exemplary discontinuous reception (DRX) operation applicable to the disclosure.

## DETAILED DESCRIPTION

Embodiments of the disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the disclosure, for simplicity, this technology will be referred to as NR (New Radio or New RAT).

For the sake of clarity, 3GPP NR is mainly described, but the technical idea of the disclosure is not limited thereto.

In the disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least a part of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

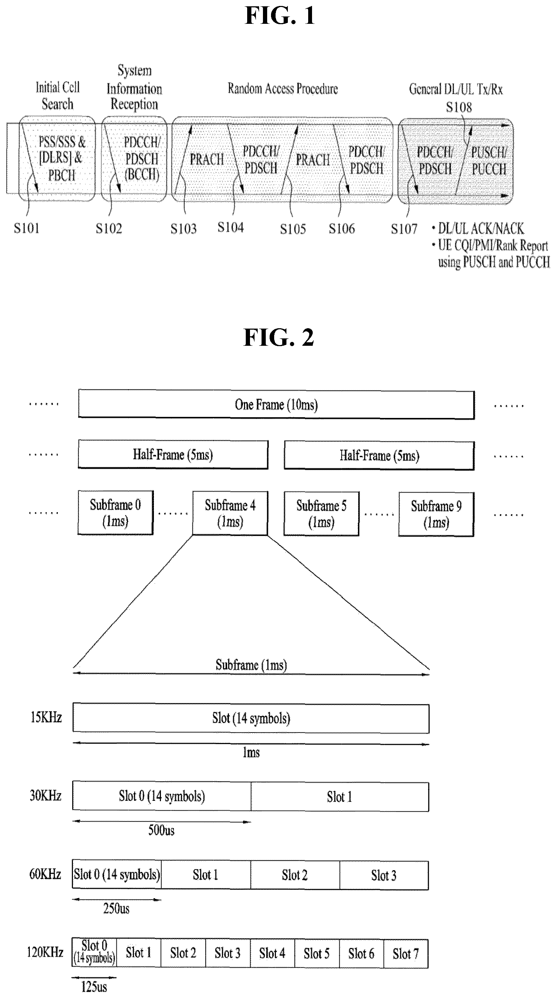

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

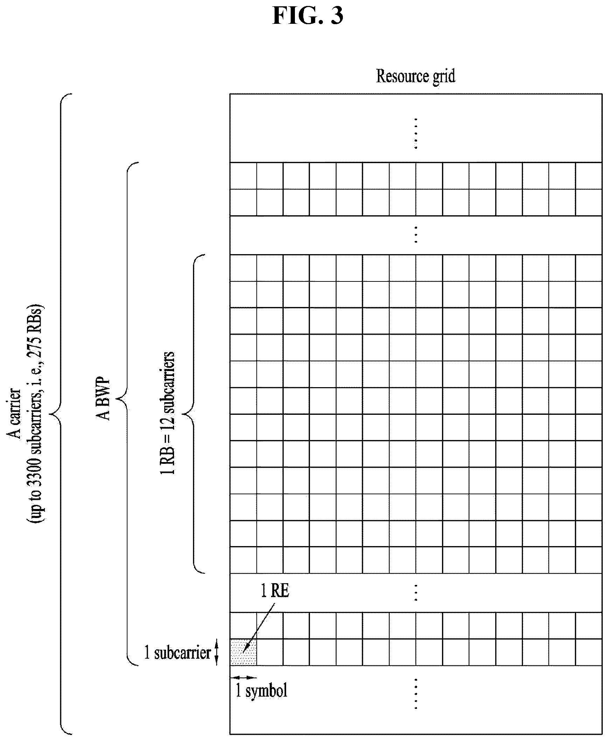

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

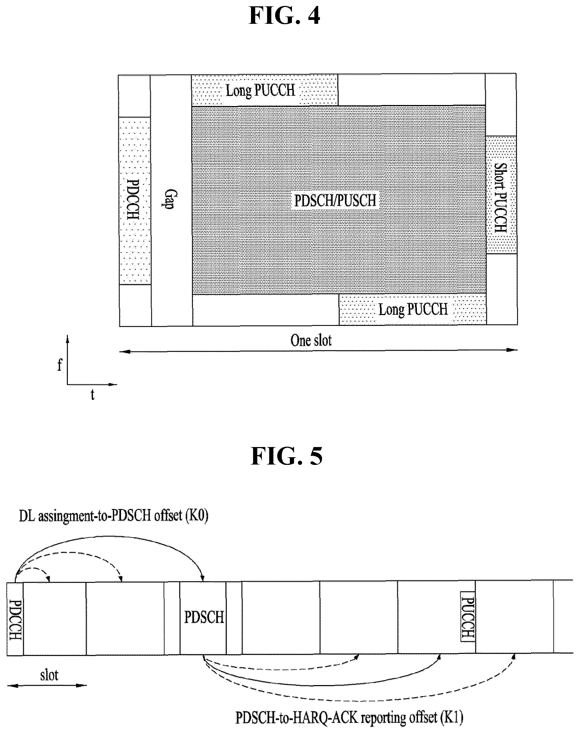

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |

(continued)

| DCI format | Usage |
|---|---|
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{\text{symb}}^{\text{PUCCH}}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission.

Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured in the UE may be configured for PUCCH transmission. At least the primary cell may be configured as a cell for PUCCH transmission. At least one PUCCH cell group may be configured in a UE based on at least one cell for which PUCCH transmission is configured, and each PUCCH cell group includes one or more cells. A PUCCH cell group may be simply referred to as a PUCCH group. PUCCH transmission may be configured for a SCell as well as the primary cell. The primary cell belongs to the primary PUCCH group, and the PUCCH-SCell to which PUCCH transmission is configured belongs to the secondary PUCCH group. The PUCCH on the primary cell may be used for cells belonging to the primary PUCCH group, and the PUCCH on the PUCCH-SCell may be used for cells belonging to the secondary PUCCH group.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH.
- Time domain resource assignment: Indicates K0 and the starting position (e.g. OFDM symbol index) and length (e.g. the number of OFDM symbols) of the PDSCH in a slot
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as a HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by a HARQ process ID.

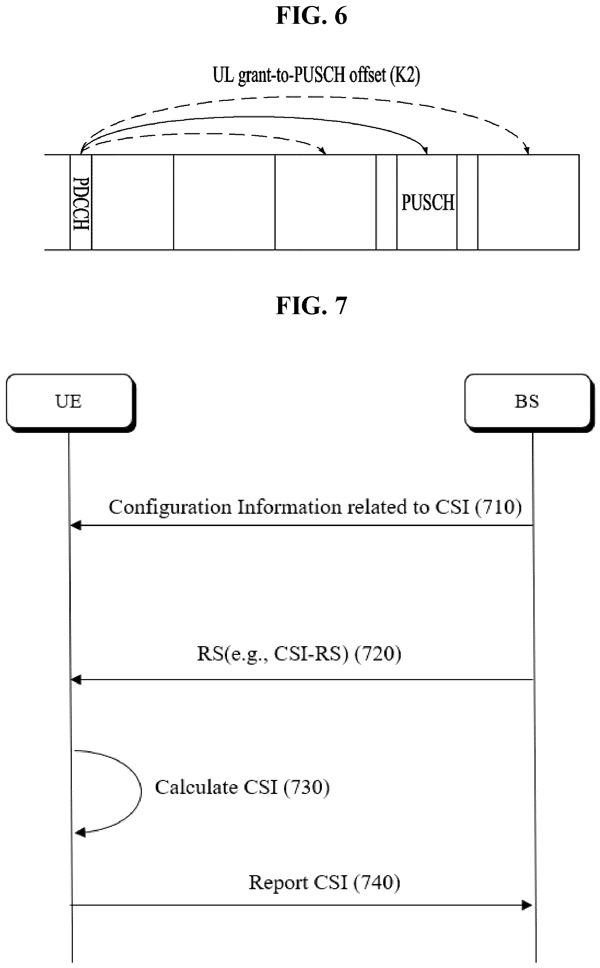

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

A CSI codebook (e.g., PMI codebook) defined in the NR specifications may be broadly classified into a Type I codebook and a Type II codebook. The Type I codebook mainly targets single user MIMO (SU-MIMO) that supports both a high order and a low order. The Type II codebook primarily supports multi-user MIMO (MU-MIMO), which is capable of handling a maximum of two layers. While the Type II codebook is capable of providing more accurate CSI compared to Type I, the Type II codebook may also increase signaling overhead. On the other hand, an Enhanced Type II codebook is introduced to address the CSI overhead issues associated with the existing Type II codebook. The Enhanced Type II codebook may reduce the payload of the codebook by considering the correlation in the frequency domain.

CSI reporting over a PUSCH may be configured as Part 1 and Part 2. Part 1 has a fixed payload size and is used to identify the number of information bits in Part 2. Part 1 is fully transmitted before Part 2.

- For the Type I CSI feedback, Part 1 includes an RI (if reported), a CRI (if reported), and the CQI of a first codeword. Part 2 includes a PMI, and when RI > 4, Part 2 also includes the CQI.

For the Type II CSI feedback, Part 1 includes an RI (if reported), a CQI, and an indication of the number of non-zero WB amplitude coefficients for each layer of Type II CSI. Part 2 includes the PMI of the Type II CSI.

- For the Enhanced Type II CSI feedback, Part 1 includes an RI (if reported), a CQI, and an indication of the total number of non-zero WB amplitude coefficients for all layers of Enhanced Type II CSI. Part 2 includes the PMI of the Enhanced Type II CSI.

For the PUSCH, CSI reporting includes two parts. If the CSI payload to be reported is smaller than a payload size provided by PUSCH resources allocated for CSI reporting, the UE may drop parts of the Part 2 CSI.

Semi-persistent CSI reporting performed with PUCCH format 3 or 4 supports Type II CSI feedback but supports only Part 1 of Type II CSI feedback.

Quasi-co location (OCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of TCI-state configurations may be configured in the UE through a higher layer parameter PDSCH-Config. Each TCI-state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Beam Management (BM)

The BM refers to a series of processes for acquiring and maintaining a set of BS beams (transmission and reception point (TRP) beams) and/or a set of UE beams available for DL and UL transmission/reception. The BM may include the following processes and terminology.

- Beam measurement: an operation by which the BS or UE measures the characteristics of a received beamformed signal
- Beam determination: an operation by which the BS or UE selects its Tx/Rx beams
- Beam sweeping: an operation of covering a spatial domain by using Tx and/or Rx beams for a prescribed time interval according to a predetermined method
- Beam report: an operation by which the UE reports information about a signal beamformed based on the beam measurement.

The BM procedure may be divided into (1) a DL BM procedure using an SSB or CSI-RS and (2) a UL BM procedure using an SRS. Further, each BM procedure may include Tx beam sweeping for determining a Tx beam, and Rx beam sweeping for determining an Rx beam.

The DL BM procedure may include (1) transmission of beamformed DL RSs (e.g., CSI-RS or SSB) from the BS and (2) beam reporting from the UE.

A beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

Artificial intelligence/machine learning (AI/ML)

With the technological development of AI/ML, node(s) and UE(s) constituting a wireless communication network are becoming intelligent/advanced, and in particular, due to intelligence of a network/BS, it is expected that various network/BS determination parameter values (e.g., transmission and reception power of each BS, transmission power of each UE, precoder/beam of BS/UE, time/frequency resource allocation for each UE, or a duplex method of BS) are rapidly optimized and derived/applied according to various environmental parameters (e.g., distribution/location of BSs, distribution/location/material of building/furniture, location/moving direction/speed of UEs, and climate information). In line with this trend, many standardization organizations (e.g., 3GPP or O-RAN) consider introduction of the network/BS determination parameter values, and research on this is also actively underway.

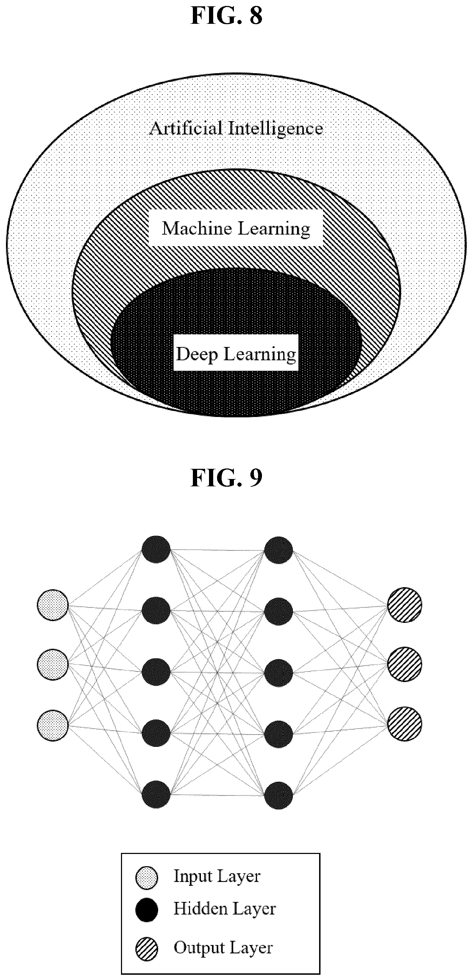

In a narrow sense, AI/ML may be easily referred to as deep learning-based artificial intelligence, but is conceptually shown in FIG. 8.

- Artificial intelligence: This may correspond to all automation by which machines replace a human work.
- Machine learning: Without explicitly programming rules, machines may learn patterns for decision-making on their own from data.
- Deep learning: This is an artificial neural network-based AI/ML model in which a machine performs all at once from unstructured data to feature extraction and determination and an algorithm depends upon a biological nervous system, that is, a multi-layer network of interconnected nodes for feature extraction and transformation inspired by a neural network. A common deep learning network architecture may include deep neural networks (DNNs), recurrent neural networks (RNNs) and convolutional neural networks (CNNs).

Classification of types of AI/ML according to various references

1. Offline vs Online

(1) Offline Learning: This complies with a sequential procedure of database collection, learning, and prediction. In other words, collection and learning are performed offline, and the completed program may be installed in the field and used for prediction. In most situations, this offline learning method is used. In offline learning, the system does not learn incrementally. Instead, learning is performed using all available collected data, and the results are applied without further learning. If learning on new data becomes necessary, learning may be initiated again using new complete data.
(2) Online Learning: Online learning is a method of improving performance little by little by incrementally learning with additionally generated data based on the fact that data to be used for learning is continuously generated recently through the Internet. Real-time learning is performed on specific units of data (batches) collected online, thereby allowing the system to quickly adapt to varying data.

To build an AI system, learning may be performed solely through online learning using only data generated in real-time. Alternatively, after conducting offline learning using a specific data set, additional learning may be performed using subsequently generated real-time data (online + offline learning).

2. Classification according to AI/ML Framework concept

(1) Centralized Learning: When training data collected from a plurality of different nodes is reported to a centralized node, all data resources/storage/learning (e.g., supervised, unsupervised, and reinforcement learning) are performed by one central node.
(2) Federated Learning: A collective AI/ML model is configured based on data across decentralized data owners. Instead of using data into an AI/ML model, a local node/individual device collects data and a train a copy of the AI/ML model thereof, and thus it is not required to report source data to a central node. In federated learning, a parameter/-weight of the AI/ML model may be transmitted back to the centralized node to support general AI/ML model training. An advantage of federated learning includes increased computation speed and superiority in terms of information security. That is, a process of uploading personal data to a central server is unnecessary, and leakage and abuse of personal information may be prevented.
(3) Distributed Learning: The machine learning process represents a concept that is scaled and deployed across a cluster of nodes. A training AI/ML model is split and shared across multiple nodes operating concurrently to speed up AI/ML model training.

3. Classification according to learning method

(1) Supervised Learning: Supervised learning is a machine learning task that aims to learn a mapping function from input to output when a labeled data set is given. The input data is called training data and has known labels or outcomes. An example of the supervised learning may include (i) Regression: Linear Regression, Logistic Regression, (ii) Instance-based Algorithms: k-Nearest Neighbor (KNN), (iii) Decision Tree Algorithms: CART, (iv) Support Vector Machines: SVM, (v) Bayesian Algorithms: Naive Bayes, and (vi) Ensemble Algorithms: Extreme Gradient Boosting, Bagging: Random Forest. The supervised learning may be further grouped due to regression and classification problems, and classification predicts a label and regression predicts a quantity.

(2) Unsupervised Learning: This is a machine learning task that aims to learn a function that describes a hidden structure in unlabeled data. Input data is unlabeled and has no known results. Some examples of unsupervised learning include K-means clustering, principal component analysis (PCA), nonlinear independent component analysis (ICA), and LSTM.

(3) Reinforcement Learning: In reinforcement learning (RL), an agent aims to optimize a long-term goal by interacting with an environment based on a trial-and-error process, which is goal-oriented learning based on an interaction with the environment. Examples of an RL algorithm may include (i) Q-learning, (ii) Multi-armed bandit learning, (iii) Deep Q Network, State-Action-Reward-State-Action (SARSA), (iv) Temporal Difference Learning, (v) Actor-critic reinforcement learning, (vi) Deep deterministic policy gradient, and (vii) Monte-Carlo tree search. The RL may be further grouped into AI/ML model-based RL and AI/ML model-free RL. Model-based RL is an RL algorithm that uses a predictive AI/ML model to obtain transition probabilities between states using various dynamic states of the environment and an AI/ML model in which these states lead to rewards. Model-free RL is a value- or policy-based RL algorithm that achieves maximum future reward, which is less computationally complex in multi-agent environments/states and does not require accurate representation of the environment. The RL algorithm may also be classified into value-based RL versus policy-based RL, policy-based RL versus non-policy RL, and the like.

AI/ML models

FIG. 9 shows an example of a feed-forward neural network (FFNN) AI/ML model. Referring to FIG. 9, the FFNN AI/ML model includes an input layer, a hidden layer, and an output layer.

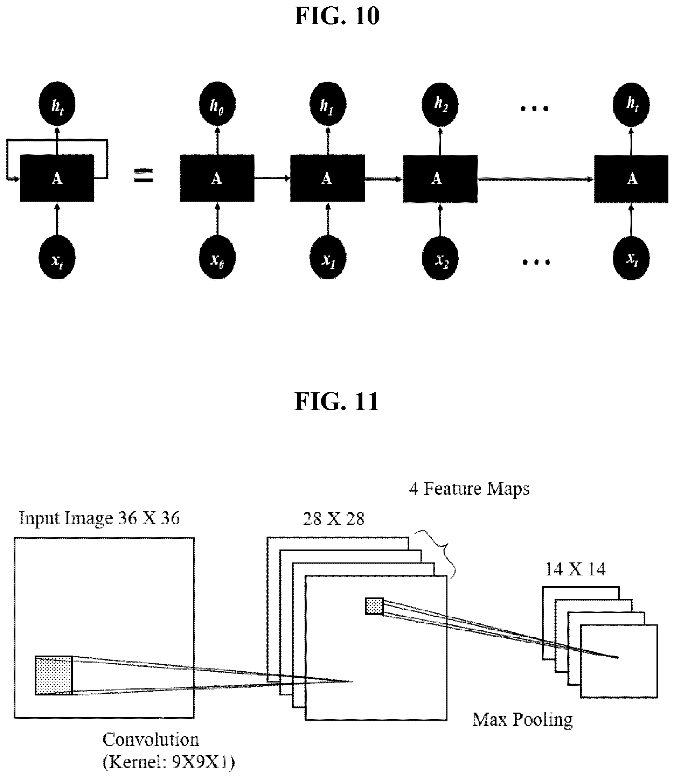

FIG. 10 shows an example of a recurrent neural network (RNN) AI/ML model. Referring to FIG. 10, the RNN AI/ML model is a type of artificial neural network in which a hidden node is connected to a directed edge to form a directed cycle and is an AI/ML model suitable for processing sequentially appearing data such as voice or text. One type of the RNN is a long short-term memory (LSTM), and the LSTM is a structure in which a cell-state is added to a hidden state of the RNN. In detail, in the LSTM, an input gate, a forget gate, and an output gate are added to the RNN cell, and a cell state is added. In Equation 10, A represents a neural network, $x_t$ denotes an input value, and $h_t$ denotes an output value. Here, $h_t$ may represent the current state value based on time, while $h_{t-1}$ may represent the previous state value.

FIG. 11 shows a convolution neural network (CNN) AI/ML model. The CNN is used for two purposes including reduction in AI/ML model complexity and extraction of good features by applying convolution computation commonly used in a video processing or image processing field. Referring to FIG. 11, a kernel or a filter means a unit/structure that applies a weight to an input in a specific range/unit. The kernel (or filter) may be modified through learning. A stride is a movement range in which the kernel is moved within the input. A feature map is the result of applying a kernel to an input. Padding refers to a value added to adjust the size of the feature map. To encourage robustness against distortion and changes, multiple feature maps may be extracted. Pooling refers to computation (e.g., max pooling or average pooling) to reduce the size of the feature map by downsampling the feature map.

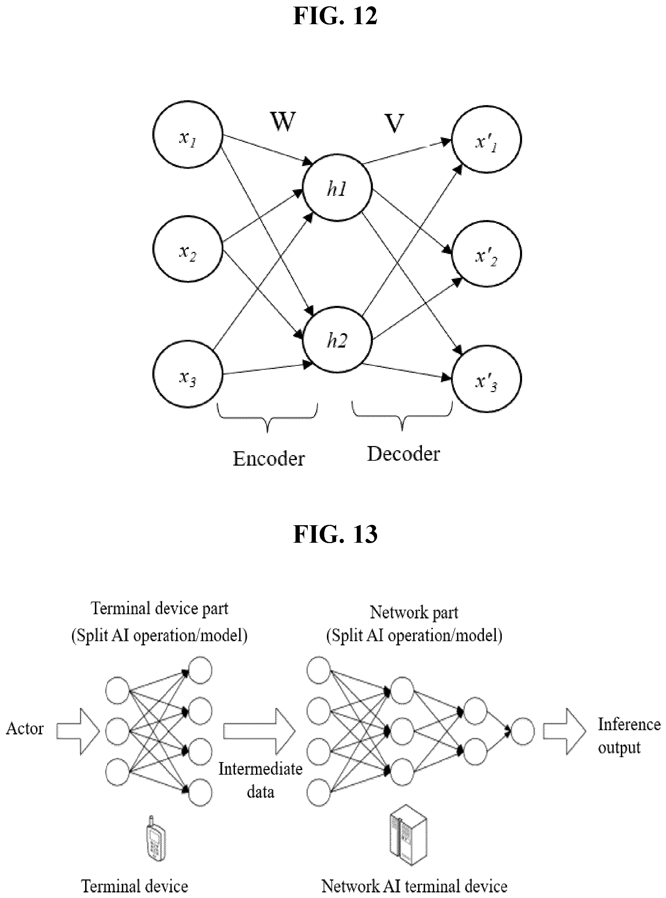

FIG. 12 shows an auto-encoder AI/ML model. Referring to FIG. 12, the auto-encoder is a neural network that receives a feature vector x and outputs the same or similar vector x' and a type of unsupervised learning with input and output nodes having the same feature. An autoencoder reconstructs the input, and thus, the output may be referred to as reconstruction. A loss function may be represented according to Equation 1 below.

[Equation 1]

$$\arg \min_{W,V} \left\| x - g\big(f(x)\big) \right\|^2 ,\ where\ \mathbf{h} = \mathrm{f(x)} = \mathbf{Wx}, \mathbf{x'} = \mathrm{g(h)} = \mathbf{Vh}$$

In Equation 12, the loss function of the autoencoder is calculated based on the difference between the input and output. Based on the loss function of the autoencoder, the degree of loss in the input is assessed, and an optimization process is applied to the autoencoder to minimize the loss.

FIG. 13 is a diagram illustrating split AI inference.

FIG. 13 illustrates a case where a model inference function is collaboratively performed between an end devices such as a UE and a network AI/ML endpoint during the split AI operation.

In addition to the model inference function, a model training function, actor, and data collection function may each be split into multiple parts based on the current task and environment. These functions may be executed through the collaboration of multiple entities.

For example, computation-intensive and energy-intensive parts may be performed at the network endpoint, while privacy-sensitive and latency-sensitive parts may be executed on the end device. In this case, the end device executes tasks/models up to a specific part/layer based on input data and then transmits intermediate data to the network endpoint. The network endpoint executes the remaining parts/layers and provides inference outputs to one or more devices performing the operations/tasks.

The following describes a functional framework for AI operations.

Herein, the following terms may be defined for more detailed explanations of AI (or AI/ML).

- Data collection: Data collected from network nodes, management entities, or UEs, which serves as the foundation for AI model training, data analysis, and inference.
- AI model: A data-driven algorithm where AI techniques are applied to generate a set of outputs, including predictive information and/or decision parameters, based on a set of inputs.
- AI/ML training: An online or offline process of training an AI model by learning features and patterns to best represent data and obtain an AI/ML model trained for inference.
- AI/ML inference: A process that uses a trained AI model to make predictions or derive decisions based on collected data and the AI model.

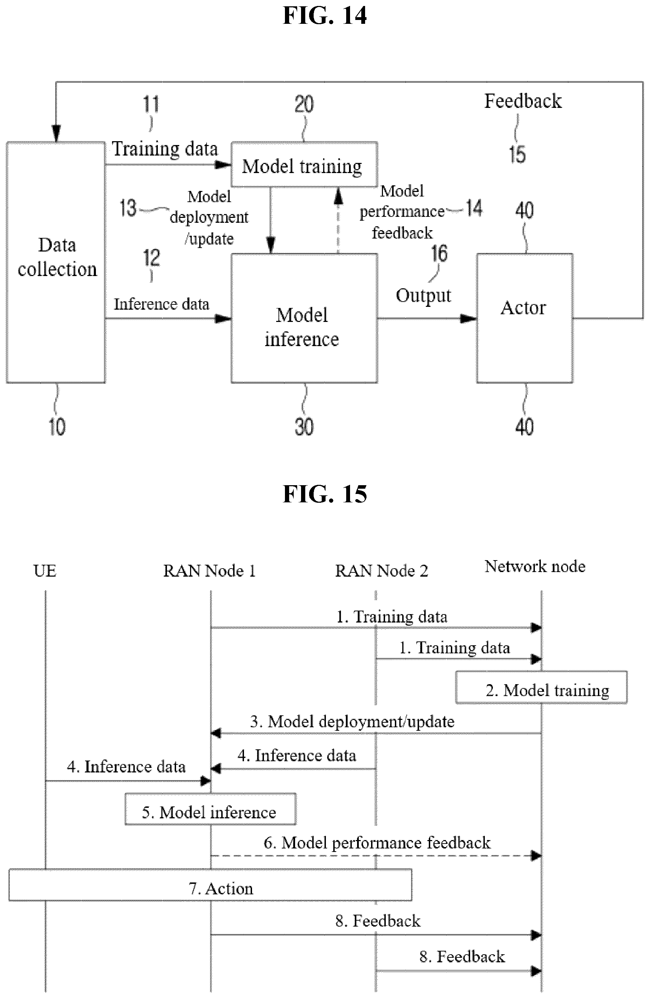

Referring to FIG. 14, a data collection function 10 collects input data and provides the processed input data to a model training function 20 and a model inference function 30.

For example, the input data may include measurements from UEs or other network entities, feedback from actors, and outputs from AI models.

The data collection function 10 performs data preparation based on the input data and provides the input data processed through the data preparation. Here, the data collection function 10 does not perform specific data preparation (e.g., data pre-processing and cleaning, forming, and transformation) for each AI algorithm, but the data collection function 10 may perform data preparation common to AI algorithms.

After completing the data preparation process, the data collection function 10 provides training data 11 to the model training function 20 and provides inference data 12 to the model inference function 30. Here, the training data 11 is input data required for the AI model training function 20. The inference data 12 is input data required for the AI model inference function 30.

The data collection function 10 may be performed by a single entity (e.g., UE, RAN node, network node, etc.) or by multiple entities. In this case, the training data 11 and inference data 12 may be provided to the model training function 20 and model inference function 30 respectively from multiple entities.

As part of the AI model testing procedure, the model training function 20 is responsible for performing AI model training, validation, and testing necessary to generate model performance metrics. If necessary, the model training function 20 may handle data preparation (e.g., data pre-processing and cleaning, forming, and transformation) based on the training data 11 provided by the data collection function 10.

Here, a model deployment/update 13 is used to initially deploy the trained, validated, and tested AI model to the model inference function 30 or to provide the updated model to the model inference function 30.

The model inference function 30 is responsible for providing an AI model inference output 16 (e.g., predictions or decisions). If applicable, the model inference function 30 may also provide model performance feedback 14 to the model training function 20. Additionally, the model inference function 30 may handle data preparation (e.g., data pre-processing and cleaning, forming, and transformation) based on the inference data 12 provided by the data collection function 10 if necessary.

Here, the output 16 refers to the inference output of the AI model generated by the model inference function 30, and the details of the inference output may vary depending on the use case.

The model performance feedback 14 may be used to monitor the performance of the AI model when available. However, the feedback may be omitted.

An actor function 40 receives the output 16 from the model inference function 30 and triggers or performs related tasks/operations. The actor function 40 may trigger tasks/operations for other entities (e.g., one or more UEs, one or more RAN nodes, one or more network nodes, etc.) or for itself.

Feedback 15 may be used to derive the training data 11 and inference data 12 or to monitor the performance of the AI model, the impact on the network, and so on.

The definitions of training, validation, and testing in a data set used in AI/ML may be distinguished as follows:

- Training data: The training data refers to a data set used for training a model.
- Validation data: The validation data refers to a data set used to validate a model that has already been trained. In other words, the validation data means a data set used to prevent overfitting of a typical training data set.

Additionally, the validation data refers to a data set used to select the best model among several trained models during the training process. Thus, the validation data may also be considered a type of learning.

- Test data: The test data refers to a data set used for final evaluation. The test data is independent of training.

In the case of the aforementioned data set, it is common to split a training set such that the training data and validation data are divided in a ratio of 8:2 or 7:3. When the test data is included, the training data, validation data, and test data may be divided in a ratio of 6:2:2 (training: validation: test).

Collaboration levels may be defined as follows, depending on the capability of the AI/ML functions between the BS and UE. It is also possible to combine multiple levels or to modify the levels by separating any one level.

Cat 0a) No Collaboration Framework: AI/ML algorithms are purely implementation-based and do not require changes to a wireless interface.

Cat 0b) This level involves a modified wireless interface suitable for efficient implementation-based AI/ML algorithms, but the level corresponds to a framework without collaboration.

Cat 1) Support between nodes is provided to enhance the AI/ML algorithm of each node. This level is applied when the UE receives support from the gNB (for training, adaptation, etc.), and vice versa. At this level, model exchange between network nodes is not required.

Cat 2) Collaborative ML tasks may be performed between the UE and gNB. This level requires the exchange of AI/ML model commands between network nodes.

The functions illustrated in FIG. 14 may be implemented in RAN nodes (e.g., BSs, TRPs, central units (CUs) of BSs), network nodes, operation administration maintenance (OAM) of network operators, or UEs.

Alternatively, two or more entities among the RAN nodes, network nodes, OAM of network operators, or UEs may collaborate to implement the functions illustrated in FIG. 14. For example, one entity may perform some of the functions in FIG. 14, while another entity may perform the remaining functions. In this way, if some of the functions illustrated in FIG. 14 are performed by a single entity (e.g., a UE, RAN node, or network node), the transfer/provision of data/information between individual functions may be omitted. For instance, if the model training function 20 and model inference function 30 are performed by the same entity, the transfer/provision of the model deployment/update 13 and model performance feedback 14 may be omitted.

Alternatively, any one of the functions illustrated in FIG. 14 may be performed through collaboration between two or more entities among the RAN nodes, network nodes, OAM of network operators, or UEs. This may be referred to as the split AI operation.

FIG. 15 illustrates a scenario where the AI model training function is performed by a network node (e.g., a core network node, OAM of a network operator, etc.), while the AI model inference function is performed by RAN nodes (e.g., BSs, TRPs, or CUs of BSs).

Step 1: RAN node 1 and RAN node 2 transmit input data for AI model training (i.e., training data) to the network node. Here, RAN node 1 and RAN node 2 may transmit data collected from a UE (e.g., UE measurements related to the RSRP, RSRQ, or SINR of serving and neighboring cells, UE location, speed, etc.) to the network node.

Step 2: The network node trains an AI model using the received training data.

Step 3: The network node deploys/updates the AI model to RAN node 1 and/or RAN node 2. RAN node 1 (and/or RAN node 2) may continue to perform model training based on the received AI model.

For the sake of convenience in explanation, it is assumed that the AI model is deployed/updated only to RAN node 1.

Step 4: RAN node 1 receives input data for AI model inference (i.e., inference data) from the UE and RAN node 2.

Step 5: RAN node 1 performs the AI model inference using the received inference data to generate output data (e.g., predictions or decisions).

Step 6: If applicable, RAN node 1 may transmit model performance feedback to the network node.

Step 7: RAN node 1, RAN node 2, and the UE (or RAN node 1 and UE, or RAN node 1 and RAN node 2) perform actions based on the output data. For example, in the case of a load balancing operation, the UE may move from RAN node 1 to RAN node 2.

Step 8: RAN node 1 and RAN node 2 transmit feedback information to the network node.

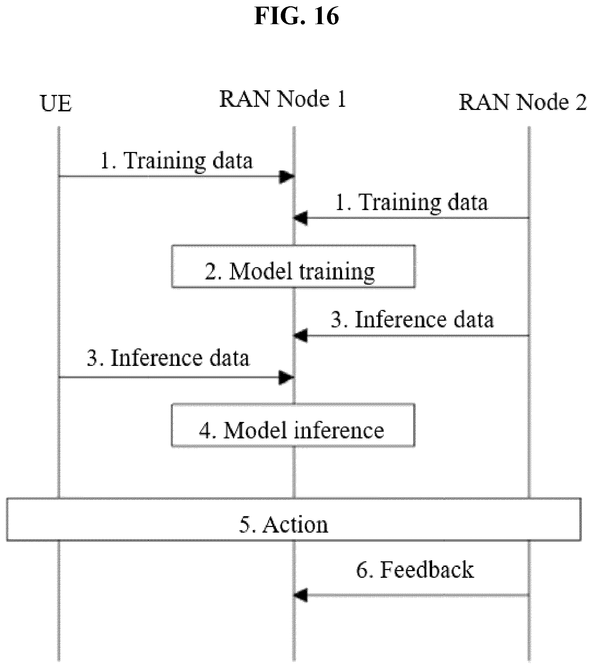

FIG. 16 illustrates a scenario where both the AI model training function and the AI model inference function are performed by RAN nodes (e.g., BSs, TRPs, or CUs of BSs).

Step 1: A UE and RAN node 2 transmit input data for AI model training (i.e., training data) to RAN node 1.

Step 2: RAN node 1 trains an AI model using the received training data.

Step 3: RAN node 1 receives input data for AI model inference (i.e., inference data) from the UE and RAN node 2.

Step 4: RAN node 1 performs the AI model inference using the received inference data to generate output data (e.g., predictions or decisions).

Step 5: RAN node 1, RAN node 2, and the UE (or RAN node 1 and UE, or RAN node 1 and RAN node 2) perform actions based on the output data. For example, in the case of a load balancing operation, the UE may move from RAN node 1 to RAN node 2.

Step 6: RAN node 2 transmits feedback information to RAN node 1.

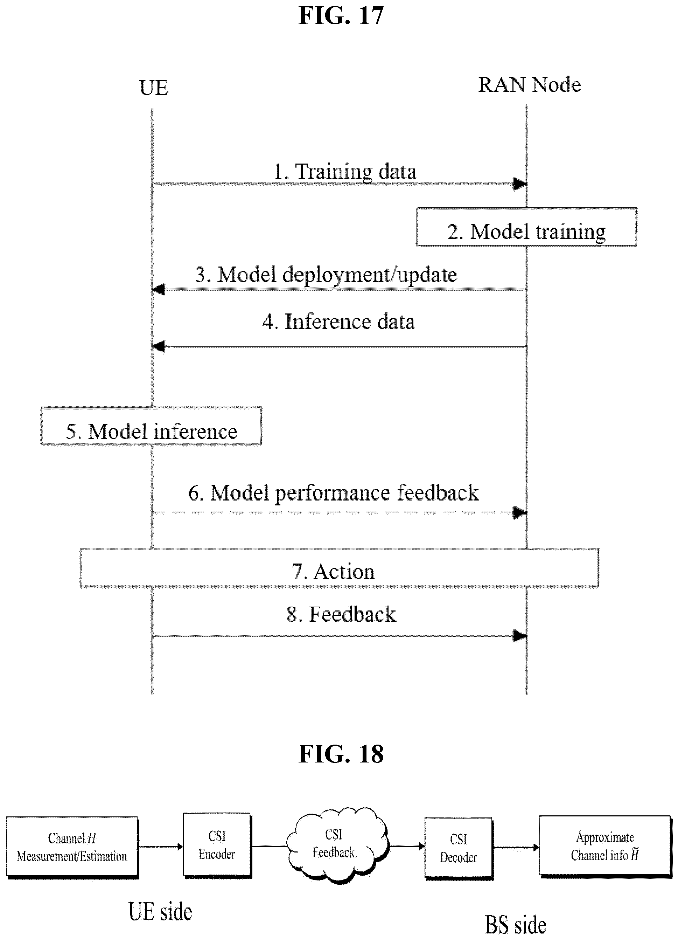

FIG. 17 illustrates a scenario where the AI model training function is performed by a RAN node (e.g., a BS, a TRP, or CUs of the BS), while the AI model inference function is performed by a UE.

Step 1: The UE transmits input data for AI model training (i.e., training data) to the RAN node. Here, the RAN node may collect data from various UEs and/or other RAN nodes (e.g., UE measurements related to the RSRP, RSRQ, or SINR of serving and neighboring cells, UE location, speed, etc.).

Step 2: The RAN node trains an AI model using the received training data.

Step 3: The RAN node deploys/updates the AI model to the UE. The UE may continue to perform model training based on the received AI model.

Step 4: The UE receives input data for AI model inference (i.e., inference data) from the RAN node (and/or from other UEs).

Step 5: The UE performs the AI model inference using the received inference data to generate output data (e.g., predictions or decisions).

Step 6: If applicable, the UE may transmit model performance feedback to the RAN node.

Step 7: The UE and RAN node perform actions based on the output data.

Step 8: The UE transmits feedback information to the RAN node.

**CQI/RI determination for AI/ML based CSI report**

With the advancement of computing technologies and AI/ML technologies, nodes and UEs included in a wireless communication network are becoming more intelligent and sophisticated. In particular, due to the intelligence of the network, it is expected that various network decision parameter values (e.g., transmission and reception power of each BS, transmission power of each UE, precoders/beams for each BS/UE, time/frequency resource allocation for each UE, duplex modes of each BS, etc.) may be quickly optimized and applied based on various network environmental parameters (e.g., distribution/location of BSs, distribution/location/material of buildings/furniture, location/movement direction/speed of UEs, climate information, etc.).

A CQI/RI determination method for performing AI/ML-based CSI reporting in an evolved network/gNB/UE will be proposed below.

FIG. 18 is a diagram for explaining AI-based CSI feedback.

In a method for reducing CSI feedback payload overhead, a common AI model may be based on compression at the UE and/or BS. For example, the CSI encoder of the UE and the CSI decoder of the BS may be assumed as shown in FIG. 18. The encoder and decoder may be related to autoencoders, and a convolutional neural network (CNN) may be used for efficient reduction of the channel size/dimension.

In AI/ML-based payload reduction, what is to be compressed is a critical factor. There are two main types of channel feedback: explicit feedback and implicit feedback. LTE and NR uses implicit feedback where an RI/CQI/PMI are reported to the BS, instead of reporting a raw channel matrix or channel covariance matrix. Implicit feedback has the advantage of lower feedback overhead compared to explicit feedback. When AI/ML is used for CSI payload reduction, information on a compressed raw channel may be fed back to the gNB, which may lead to explicit feedback.

As another example of AI/ML-based CSI feedback, compressing an existing PMI, for example, Type I and Type II CSI may be considered. In Rel-16/17 Type II CSI, linear-based vectors such as DFT vectors are used for compression in the frequency domain to reduce the payload of Rel-15 Type II CSI. Accordingly, AI/ML may be used to further reduce the payload of existing CSI and improve performance thereof.

For example, two-sided (at network and UE) AI/ML may be considered. In the two-sided (at network and UE) case, auto-encoder-like CSI reporting may be performed on the assumption that both an AI/ML gNB and a UE have capabilities (training and/or inference) for AI/ML.

Alternatively, single-sided (at network or UE) AI/ML may be considered. In the single-sided case, specific parameter optimization (performance and/or payload) based on AI/ML may be considered for a legacy codebook.

For CSI compression using CSI reporting based on a two-sided AI/ML model, the following needs to be considered.

- CSI generation model output/CSI reconstruction model input (e.g., configuration size/format), potential post/pre-processing of CSI generation model output/CSI reconstruction model input
- CQI determination
- RI determination

That is, it is necessary to discuss how to determine a CQI and an RI in AI/ML-based CSI reporting (especially, when spatial-frequency domain compression is performed based on a two-sided AI/ML model).

As described above, the two-sided AI/ML model includes an AI/ML model which is deployed/configured and performs inference in each of the UE and the gNB (or network). For example, an AI/ML model in the form of an auto-encoder may be configured. The UE (CSI encoder) calculates an AI/ML model inference output by using, as an input, channel information (e.g., a channel matrix/channel covariance matrix/channel eigenvector) or information obtained by pre-processing the channel information, and feeds back output information to the gNB through or without post-processing. The gNB (CSI decoder) calculates an inference output by inputting the feedback information to the AI/ML model through or without pre-processing, and finally decodes/obtains CSI through or without post-processing of the inference output.

In this two-sided model, the UE may not directly determine a PMI from the information of the AI/ML model (encoder) output, thereby having difficulty calculating other CSI (e.g., CQI/RI) based on the PMI. In other words, in the two-sided model, the gNB determines the PMI through the AI/ML model after receiving the AI/ML-based CSI report from the UE, and (if there is no separate PMI signaling later from the gNB), the UE may not identify a PMI to which its reported AI/ML-based CSI corresponds to. Moreover, when the UE is not capable of identifying the PMI, the UE has difficulty calculating other CSI (e.g., CQI/RI).

In the disclosure, a method of solving this problem is proposed.

Table 6 is an excerpt of CQI calculation specified in the legacy NR standard (TS 38.214).

[Table 6]

| Section 5.2.2.5 |
| --- |

The PDSCH transmission scheme where the UE may assume that PDSCH transmission would be performed with up to 8 transmission layers as defined in Clause 7.3.1.4 of [4, TS 38.211]. For CQI calculation, the UE should assume that PDSCH signals on antenna ports in the set $[1000,..., 1000+\nu-1]$ for $\nu$ layers would result in signals equivalent to corresponding symbols transmitted on antenna ports $[3000,..., 3000+P-1]$, as given by

$$\begin{bmatrix} y^{(3000)}(i) \\ \cdots \\ y^{(3000+P-1)}(i) \end{bmatrix} = W(i) \begin{bmatrix} x^{(0)}(i) \\ \cdots \\ x^{(\nu-1)}(i) \end{bmatrix}$$

where $x(i) = [x^{(0)}(i)...x^{(\nu-1)}(i)]^T$ is a vector of PDSCH symbols from the layer mapping defined in Clause 7.3.1.4 of [4, TS 38.211], $P \in [1,2,4,8,12,16,24,32]$ is the number of CSI-RS ports. If only one CSI-RS port is configured, $W(i)$ is 1. If the higher layer parameter *reportQuantity* in *CSI-ReportConfig* for which the CQI is reported is set to either 'cri-RI-PMI-CQI' or 'cri-RI-LI-PMI-CQI', $W(i)$ is the precoding matrix corresponding to the reported PMI applicable to $x(i)$. If the higher layer parameter *reportQuantity* in *CSI-ReportConfig* for which the CQI is reported is set to 'cri-RI-CQI', $W(i)$ is the precoding matrix corresponding to the procedure described in Clause 5.2.1.4.2. If the higher layer parameter *reportQuantity* in *CSI-ReportConfig* for which the CQI is reported is set to 'cri-RI-i1-CQI', $W(i)$ is the precoding matrix corresponding to the reported i1 according to the procedure described in Clause 5.2.1.4.2. The corresponding PDSCH signals transmitted on antenna ports $[3000,...,3000 + P - 1]$ would have a ratio of EPRE to CSI-RS EPRE equal to the ratio given in Clause 5.2.2.3.1. If the higher layer parameter *reportQuantity* in *CSI-ReportConfig* for which the CQI is reported is set to either 'cri-RI-PMI-CQI' or 'cri-RI-LI-PMI-CQI', the corresponding CSI-RS Resource Set for channel measurement is configured with two Resource Groups and $N$ Resource Pairs, as described in clause 5.2.1.4.1, the reported CRI corresponds to an entry of the $N$ Resource Pairs, and the reported rank combination is $\{\nu_1, \nu_2\}$, as described in clause 5.2.1.4.2, for CQI calculation, the UE should assume that...

As described in Table 6, there should be a UE assumption for a PMI, for CSI calculation. In the case of a two-sided AI/ML model, however, an encoder output of the UE may not be assumed as a PMI as described above, which causes ambiguity in CQI and/or RI calculation. Further, when an eigenvector is used as an AI/ML input, a CQI/RI needs to be calculated.

## (1) Proposal 1

In (two-sided) AI/ML-based CSI reporting, AI/ML-based CSI reporting and its linked or paired legacy CSI reporting should be triggered together to obtain CSI and/or RI information (at the gNB).

In proposal 1, a legacy CSI report may include a codebook-based (not AI/ML-based) CSI report for PMI acquisition. The codebook-based CSI report may include Type I CSI and Type II CSI (e.g., Rel-15/16/17/18) described above. A linked or paired CSI report may refer to a CSI report sharing the same CSI-RS id, or when a new linked id or paired id is introduced, a CSI report having the same id. The AI/ML-based CSI report includes the afore-described two-sided AI/ML-based spatial-frequency domain compression CSI.

When proposal 1 is used, a reporting quantity configuration for the AI/ML-based CSI report may include only AI/ML generated CSI. Then, the remaining CQI and/or RI may be reported in the paired or linked CSI report. A codebook used for the paired/linked CSI report may be pre-configured in a CSI reporting configuration for the UE by the gNB, or a default PMI (e.g., Rel-16 Type II CSI or an eigenvector) may be configured/indicated by the gNB. Whether to report a PMI, or in the case of a CQI, whether it is a wide band CQI or a subband CQI may also be separately configured by the gNB.

For example, an AI/ML-based CSI report and at least one legacy CSI report may be linked to or paired with each other. An AI/ML-based CSI reporting configuration may include information about the linked or paired legacy CSI report (configuration). The legacy CSI report is a CSI report that does not use an AI/ML model, and may be referred to as a non-AI/ML-based CSI report. When the UE performs AI/ML-based CSI reporting, it may also perform linked or paired legacy CSI reporting. Alternatively, when the network triggers AI/ML-based CSI reporting, it may also indicate legacy CSI reporting linked or paired with the AI/ML-based CSI reporting to the UE.

In the case of paired/linked CSI, it may be assumed that occupation of a CSI processing unit (CPU) is doubled, or the gNB may set/indicate a new CPU value (based on a capability report of the UE).

The AI/ML-based CSI report and the linked or paired legacy CSI report may be transmitted together (through the same time resource/signal), which should not be construed as limiting.

For example, in the case of a periodic or semi-periodic configuration for two CSI reports (e.g., AI/ML CSI and legacy CSI), the CSI may be reported with different periodicities and/or offsets, for network flexibility. In this case, the payload of a PMI may be determined based on a value corresponding to a CQI/RI. Therefore, the payload of the PMI is determined based on the most recently reported/transmitted CQI/RI of the UE. The linked or paired CSI report may be transmitted through a different channel. For example, the CQI and/or the RI may be transmitted through a PUCCH, and the remaining AI/ML-generated CSI may be transmitted through a PUSCH. When the two CSI reports are configured to have the same periodicity/time resource, they may be transmitted at once through one signal (e.g., PUSCH). Alternatively, even if the two CSI reports (e.g., AI/ML CSI and legacy CSI) have different periodicities, they may be transmitted at once through one signal (e.g., PUSCH) in time resources where the two CSI reports overlap.

In proposal 1, for example, the two CSI reportings (e.g., the legacy report and the AI/ML-based CSI report) may be triggered independently. As described above, only linkage is additionally configured in the configuration for the two CSI reportings, and the UE calculates CSI with mutual dependency as in proposal 1. In this case, configuration flexibility may be increased by leaving it up to the gNB to choose whether to trigger the two CSI reportings simultaneously or at different times. Alternatively, the two CSI reportings may belong to one reporting set, and the corresponding CSI reportings may be triggered simultaneously by a higher layer such as a MAC-CE/DCI. Alternatively, a method of linking multiple CSI reportings to a specific codepoint of a field indicated by a MAC-CE/DCI and triggering them by a MAC-CE/DCI may also be considered.

Although the above description is made mainly of CSI reporting, it may also be extended to a CSI resource configuration, such that linkage is configured between two CSI resources (e.g., AI/ML CSI resource and legacy CSI resource), and thus the two resources have mutual dependency. For example, one resource may be configured for AI/ML-based CSI reporting and the other resource may be configured for legacy CSI reporting, so that the two resources may be configured to have linkage to one report.

1) Proposal 1-1. Another example of proposal 1 is a method of receiving configurations for AI/ML-based CSI reporting and legacy CSI reporting in one reporting configuration and performing the reportings at once.

In proposal 1-1, CSI reportings configured separately in proposal 1 are configured in one CSI reporting configuration and performed at once. For example, a CQI and/or a RI may be calculated/reported based on a legacy codebook, and CSI generated based on AI/ML may be reported. The AI/ML-based CSI generation may be based on the RI.

Therefore, the AI/ML generated CSI and/or the CQI and/or the RI and/or a CRI and/or an LI may be reported as CSI contents in proposal 1-1.

## (2) Proposal 2

In (two-sided) AI/ML-based CSI reporting, other CSI contents (e.g., SINR) are reported instead of a CQI, and the gNB schedules DL data for the UE based on the reported SINR.

Currently for a CQI, the UE reports a CQI index corresponding to a modulation order, code rate, and spectral efficiency mapped to the SINR of each CW of the UE. However, the UE should assume a PMI to calculate the SINR of each CW, as described above. Proposal 2 proposes that instead of such a CQI, an SINR is reported as new contents, and the SINR is a value calculated based on a vector (e.g., eigenvector) representing a channel measured based on a CSI-RS by the UE. The gNB may configure and indicate an MCS value for use in DL data transmission to the UE by decoding CSI using the reported SINR information and/or AI/ML-based generated CSI, and correcting an SINR value according to gNB implementation. The UE may report an eigenvalue corresponding to an eigenvector, instead of the SINR. For the SINR reporting, a legacy L1-SINR table configured for beam management may be used, or a new SINR table may be configured and indicated. Alternatively, to improve the flexibility of configuring an SINR table, the gNB may set the upper/lower bound of an SINR range, a step size, and/or the number of bits, so that reporting is performed with increased flexibility of SINR table configuration. For example, a table may be configured to have a total of 20 states by setting the SINR upper bound to 10dBm, the lower bound to 0dBm, and the step size to 0.5. Alternatively, in proposal 2, a CQI may be reported, and the gNB may recognize that the CQI is a value calculated based on an eigenvector, correct the CQI, and use it in DL scheduling for the UE.

## (3) Proposal 3

For (two-sided) AI/ML-based CSI reporting, the gNB may indicate/configure a CQI offset value to the UE, and the UE may report, to the gNB, a CQI value calculated based on the CQI offset value indicated by the gNB, together with CSI generated based on AI/ML.

For example, the gNB may signal a CQI offset value to be applied to a CQI obtained through a legacy CSI method to the UE. The UE may apply the CQI offset to the result of calculating the CQI through the legacy CSI method. When the UE transmits an AI/ML-based CSI report, the UE may also report the legacy CQI to which the CQI offset is applied to the network. In this case, proposal 3 may be understood as a more specific implementation example of proposal 1. Alternatively, the legacy CQI to which the CQI offset is applied may be transmitted as part of the AI/ML-based CSI report.

In proposal 3, a CQI offset refers to a value used to correct a CQI, when the UE calculates the CQI, and has a + or - value. A PMI assumed for calculating the CQI may be, for example, an eigenvector of a channel measured by the UE or a specific codebook, which has been pre-agreed upon between the gNB and the UE or pre-indicated by the gNB. In proposal 3, when the CQI calculated by the UE is 10 and the offset value configured for the UE by the gNB is -3, the CQI value actually reported by the UE is 7. The offset value is applied to the CQI reported by the UE or contents (e.g., SINR) corresponding to the CQI.

In another example of proposal 3, the UE may calculate a CQI based on PMI assumption information for CQI calculation, which has been configured by the gNB or pre-agreed upon, and report it together with an offset value preferred or calculated by the UE.

The CQI and/or offset value is reported to the gNB, together with CSI generated based on AI/ML.

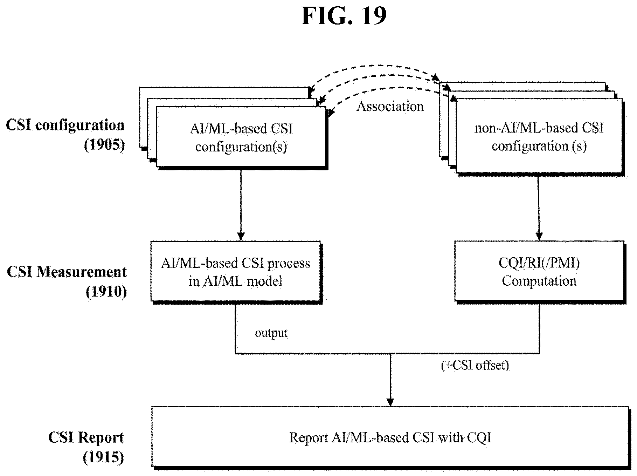

FIG. 19 is a diagram illustrating an implementation example of CSI reporting based on proposal 3.

Referring to FIG. 19, a CSI reporting procedure may be largely divided into CSI configuration through network signaling (1905), CSI measurement based on the CSI configuration (1910), and measured CSI reporting (1915). In the case of aperiodic CSI reporting, separate dynamic signaling (not shown) that triggers it may be added.

The CSI configuration (1905) may include first configuration(s) for AI/ML-based CSI reporting and second configuration(s) for non-AI/ML-based CSI reporting, and the first configuration(s) and the second configuration(s) may be associated with each other.

The CSI measurement (1910) may include a first AI/ML-based CSI process performed on AI/ML according to the first configuration(s) and a second CSI process in which a CQI/RI and/or a PMI is calculated (as in the conventional CSI method) according to the second configuration(s) (as is done conventionally). The first CSI process and the second CSI process may be performed (simultaneously) in parallel or based on the same CSI reference resource (set).

The CSI reporting (1915) may include an output from an AI/ML model based on the first CSI process and a CQI(/RI) based on the second CSI process. For example, a CQI offset may be applied to the CQI based on the second CSI process, based on the CQI(/RI) based on the second CSI process being reported together with an output from the AI/ML model based on the first CSI process.

### (4) Proposal 4

For (two-sided) AI/ML-based CSI reporting, the gNB or the NW also delivers an AI/ML model corresponding to an AI/ML decoder end to the UE, and the UE calculates a CQI/RI using a decoder output and reports it to the gNB.

In proposal 4, despite a two-sided model, the AI/ML model of the gNB is also delivered to the UE, for CQI reporting of the UE, so that the UE may calculate a final AI/ML model output (decoder-end output). The applicability of proposal 4 may be based on the capabilities of the UE. Further, since the complexity of inference is doubled in proposal 4, it may be included in AI processor complexity or CSI complexity. For example, in the case of CPU occupation, inference of only the existing encoder is counted as 1, and inference of up to the decoder is counted as 2.

### (5) Proposal 5

For (two-sided) AI/ML-based CSI reporting, the gNB or the NW configures a target RI/CQI (or SINR range), and an AI/ML-based CSI value is generated based on the value indicated by the gNB/NW and reported to the gNB.

In proposal 5, CQI/RI reporting may be skipped. Alternatively, a recommended or preferred value may be reported to the gNB as a recommendation for the change of the CQI/RI indicated by the gNB. However, in this case, the reported AI/ML-based CSI is a value based on an RI/CQI pre-configured by the gNB. Alternatively, it may be agreed that the CSI is reported based on a CQI/RI preferred by the UE.

### (6) Proposal 6

The size of (two-sided) AI/ML-based CSI varies based on a preferred RI value.

In proposal 6, the size of an AI/ML-based CSI changes according to a preferred RI value reported by the UE. For example, a CSI size for RI=2 is different from a CSI size for RI=1. Therefore, the gNB may implicitly identify an RI according to the size of CSI reported by the UE. However, in this case, a plurality of blind detections are required because the gNB does not know exact payload.

The above proposals are applicable not only to STRP but also to MTRP.

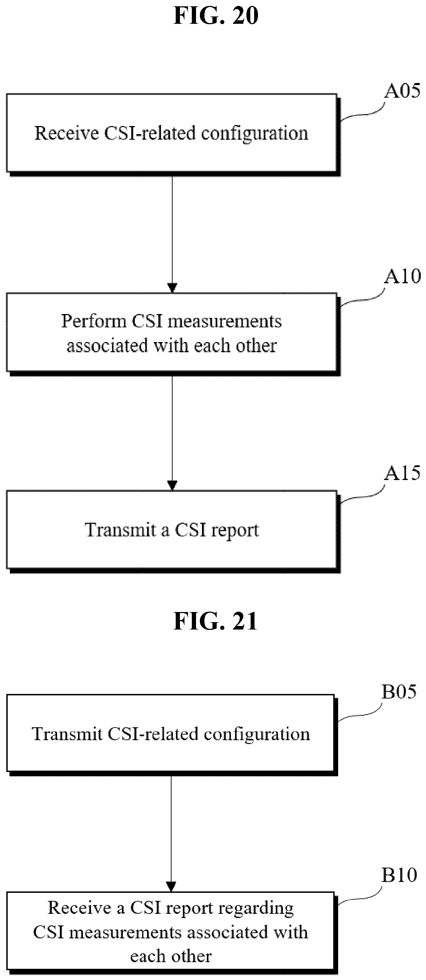

FIG. 20 is a diagram illustrating a UE operation according to an embodiment.

Referring to FIG. 20, a UE may receive a CSI-related configuration (A05).

The UE may perform, based on the CSI-related configuration, a plurality of CSI measurements associated with each other (A10). The plurality of associated CSI measurements may include a first CSI measurement performed based on an AI/ML model and a second CSI measurement performed without the AI/ML model.

The UE may transmit a CSI report based on the CSI measurements (A15). The CSI report may include an output of the AI/ML model obtained through the first CSI measurement and CQI information obtained through the second CSI measurement.

The CQI information may include a second CQI value obtained by applying a CQI offset to a first CQI value calculated from the second CSI measurement.

The CQI offset may be provided through network signaling.

Based on the first CSI measurement being triggered, the second CQI measurement linked to the first CSI measurement may be performed together with the first CSI measurement.

The first CSI measurement and the second CSI measurement may be performed respectively in a first CSI resource and a second CSI resource which are associated with each other.

The CSI configuration may include information for association of the first CSI resource and the second CSI resource.

For example, the first CSI report including an output of the AI/ML model obtained through the first CSI measurement may be transmitted through a PUSCH. The second CSI report including CQI information obtained through the second CSI measurement may be transmitted through a PUCCH.

In another example, the CSI report may be transmitted through one physical uplink channel.

The output of the AI/ML model configured for the UE may be provided as an input of an AI/ML model configured in a network.

The plurality of associated CSI measurements may be counted as N CSI processes, and N may be a value equal to or greater than 1 and may be provided through network signaling.

FIG. 21 is a diagram illustrating a BS operation according to an embodiment.

Referring to FIG. 21, a BS may transmit a CSI-related configuration (B05).

The BS may receive a CSI report for, based on the CSI-related configuration, a plurality of CSI measurements associated with each other (B10). The plurality of mutually connected CSI measurements may include a first CSI measurement performed based on an AI/ML model and a second CSI measurement performed without the AI/ML model. The CSI report may include an output of the AI/ML model obtained through the first CSI measurement and CQI information obtained through the second CSI measurement.

The CQI information may include a second CQI value obtained by applying a CQI offset to a first CQI value calculated from the second CSI measurement.

The CQI offset may be provided through network signaling.

Based on the first CSI measurement being triggered, the second CQI measurement associated with the first CSI measurement may be performed together with the first CSI measurement.

The first CSI measurement and the second CSI measurement may be performed respectively in a first CSI resource and a second CSI resource which are associated with each other.

The CSI configuration may include information for association of the first CSI resource and the second CSI resource.

In an example, a first CSI report including the output of the AI/ML model obtained through the first CSI measurement may be received through a PUSCH. A second CSI report including the CQI information obtained through the second CSI measurement may be received through a PUCCH.

In another example, the CSI reports may be received through a single physical uplink channel.

An output of the AI/ML model configured in the UE may be provided as an input of an AI/ML model configured in the BS.

The plurality of associated CSI measurements may be counted as N CSI processes, and N may be a value equal to or greater than 1 and may be provided through network signaling.

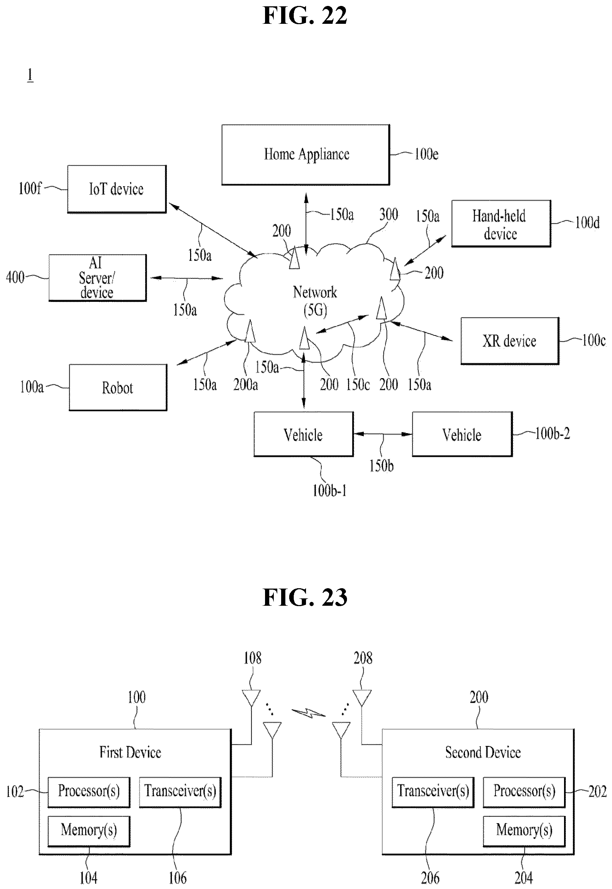

FIG. 22 illustrates a communication system 1 applied to the disclosure.

Referring to FIG. 22, a communication system 1 applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

FIG. 23 illustrates wireless devices applicable to the disclosure.

Referring to FIG. 23, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 22.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

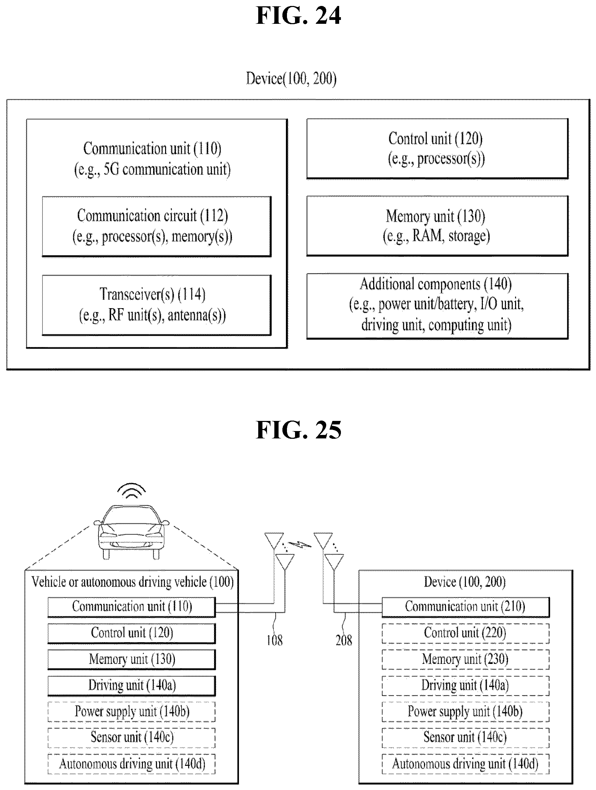

FIG. 24 illustrates another example of a wireless device applied to the disclosure. The wireless device may be implemented in various forms according to a use-case/service (refer to FIG. 22).

Referring to FIG. 24, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 23. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 22), the vehicles (100b-1 and 100b-2 of FIG. 22), the XR device (100c of FIG. 22), the hand-held device (100d of FIG. 22), the home appliance (100e of FIG. 22), the IoT device (100f of FIG. 22), a digital broadcast terminal, a hologram device, a public safety device, an MTC device, a medicine device, a fintech device (or a finance device), a security device, a climate/environment device, the AI server/device (400 of FIG. 22), the BSs (200 of FIG. 22), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 25 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

Referring to FIG. 25, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

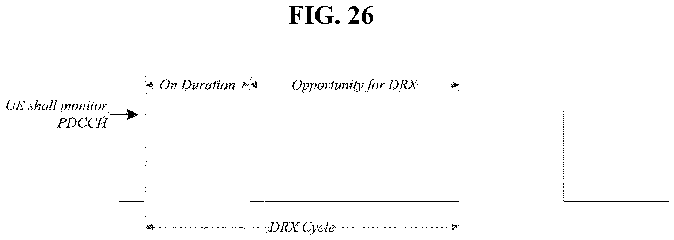

FIG. 26 is a diagram illustrating a DRX operation of a UE according to an embodiment of the disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 26, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the disclosure. Irrespective of whether DRX is configured, PDCCH monitoring may be restricted during a time period configured as a measurement gap.

DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

The above-described embodiments correspond to combinations of elements and features of the disclosure in prescribed forms. And, the respective elements or features may be considered as selective unless they are explicitly mentioned. Each of the elements or features can be implemented in a form failing to be combined with other elements or features. Moreover, it is able to implement an embodiment of the disclosure by combining elements and/or features together in part. A sequence of operations explained for each embodiment of the disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The disclosure is applicable to UEs, BSs, or other apparatuses in a wireless mobile communication system.

**Claims**

1. A method of reporting a channel state by a user equipment (UE) in a wireless communication system, the method comprising:

   receiving a channel state information (CSI)-related configuration;
   performing, based on the CSI-related configuration, a plurality of CSI measurements associated with each other; and
   transmitting a CSI report based on the CSI measurements,
   wherein the plurality of associated CSI measurements include a first CSI measurement performed based on an artificial intelligence/machine learning (AI/ML) model and a second CSI measurement performed without the AI/ML model, and
   wherein the CSI report includes an output of the AI/ML model obtained from the first CSI measurement and channel quality indicator (CQI) information obtained from the second CSI measurement.

2. The method according to claim 1, wherein the CQI information includes a second CQI value obtained by applying a CQI offset to a first CQI value calculated from the second CSI measurement.

3. The method according to claim 2, wherein the CQI offset is provided through network signaling.

4. The method according to claim 1, wherein based on the first CSI measurement being triggered, the second CQI measurement associated with the first CSI measurement is performed together with the first CSI measurement.

5. The method according to claim 1, wherein the first CSI measurement and the second CSI measurement are performed respectively in a first CSI resource and a second CSI resource that are associated with each other, and wherein the CSI configuration includes information for association of the first CSI resource and the second CSI resource.

6. The method according to claim 1, wherein a first CSI report including the output of the AI/ML model obtained from the first CSI measurement is transmitted through a physical uplink shared channel (PUSCH), and wherein a second CSI report including the CQI information obtained from the second CSI measurement is transmitted through a physical uplink control channel (PUCCH).

7. The method according to claim 1, wherein the CSI report is transmitted through one physical uplink channel.

8. The method according to claim 1, wherein the output of the AI/ML model configured for the UE is provided as an input of an AI/ML model configured in a network.

9. The method according to claim 1, wherein the plurality of associated CSI measurements are counted as N CSI processes, and

wherein N is a value equal to or greater than 1 and is provided through network signaling.

10. A computer-readable recording medium recording a program for performing the method according to claim 1.

11. A device for wireless communication, the device comprising:

a memory configured to store instructions; and
a processor configured to perform operations by executing the instructions,
wherein the operations of the processor include:

receiving a channel state information (CSI)-related configuration;
performing, based on the CSI-related configuration, a plurality of CSI measurements associated with each other; and
transmitting a CSI report based on the CSI measurements,
wherein the plurality of associated CSI measurements include a first CSI measurement performed based on an artificial intelligence/machine learning (AI/ML) model and a second CSI measurement performed without the AI/ML model, and
wherein the CSI report includes an output of the AI/ML model obtained from the first CSI measurement and channel quality indicator (CQI) information obtained from the second CSI measurement.

12. The device of claim 11, further comprising:

a transceiver,
wherein the device is a user equipment (UE) operating in a wireless communication system.

13. The device of claim 11, wherein the device is a processing device configured to control a user equipment (UE) operating in a wireless communication system.

14. A method of receiving a channel state report by a base station (BS) in a wireless communication system, the method comprising:

transmitting a channel state information (CSI)-related configuration; and
receiving, based on the CSI-related configuration, a plurality of CSI measurements associated with each other,
wherein the plurality of associated CSI measurements include a first CSI measurement performed based on an artificial intelligence/machine learning (AI/ML) model and a second CSI measurement performed without the AI/ML model, and
wherein the CSI report includes an output of the AI/ML model obtained from the first CSI measurement and channel quality indicator (CQI) information obtained from the second CSI measurement.

15. A base station (BS) for wireless communication, the BS comprising:

a memory configured to store instructions; and
a processor configured to perform operations by executing the instructions,
wherein the operations of the processor include:

transmitting a channel state information (CSI)-related configuration; and
receiving, based on the CSI-related configuration, a plurality of CSI measurements associated with each other,
wherein the plurality of associated CSI measurements include a first CSI measurement performed based on an artificial intelligence/machine learning (AI/ML) model and a second CSI measurement performed without the AI/ML model, and
wherein the CSI report includes an output of the AI/ML model obtained from the first CSI measurement and channel quality indicator (CQI) information obtained from the second CSI measurement.

# FIG. 1

Initial Cell Search — PSS/SSS & [DLRS] & PBCH — S101

System Information Reception — PDCCH/PDSCH (BCCH) — S102

Random Access Procedure — PRACH (S103) — PDCCH/PDSCH (S104) — PRACH (S105) — PDCCH/PDSCH (S106)

General DL/UL Tx/Rx — S108 — PDCCH/PDSCH — PUSCH/PUCCH — S107

• DL/UL ACK/NACK
• UE CQI/PMI/Rank Report using PUSCH and PUCCH

# FIG. 2

One Frame (10ms)

Half-Frame (5ms) — Half-Frame (5ms)

Subframe 0 (1ms) — Subframe 4 (1ms) — Subframe 5 (1ms) — Subframe 9 (1ms)

Subframe (1ms)

15KHz — Slot (14 symbols) — 1ms

30KHz — Slot 0 (14 symbols) — Slot 1 — 500us

60KHz — Slot 0 (14 symbols) — Slot 1 — Slot 2 — Slot 3 — 250us

120KHz — Slot 0 (14 symbols) — Slot 1 — Slot 2 — Slot 3 — Slot 4 — Slot 5 — Slot 6 — Slot 7 — 125us

28

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

PDCCH

PUSCH

# FIG. 7

UE

BS

Configuration Information related to CSI (710)

RS(e.g., CSI-RS) (720)

Calculate CSI (730)

Report CSI (740)

# FIG. 8

# FIG. 9

○ Input Layer
● Hidden Layer
◉ Output Layer

# FIG. 10

# FIG. 11

# FIG. 12

Encoder    Decoder

# FIG. 13

Terminal device part
(Split AI operation/model)

Network part
(Split AI operation/model)

Actor

Intermediate data

Inference output

Terminal device

Network AI terminal device

## FIG. 14

## FIG. 15

## FIG. 16

# FIG. 17

UE                                    RAN Node

1. Training data →

2. Model training

← 3. Model deployment/update

← 4. Inference data

5. Model inference

6. Model performance feedback →

7. Action

8. Feedback →

# FIG. 18

| Channel $H$ Measurement/Estimation | → | CSI Encoder | → | CSI Feedback | → | CSI Decoder | → | Approximate Channel info $\tilde{H}$ |

UE side                          BS side

# FIG. 19

**CSI configuration (1905)**

AI/ML-based CSI configuration(s)

Association

non-AI/ML-based CSI configuration (s)

**CSI Measurement (1910)**

AI/ML-based CSI process in AI/ML model

CQI/RI(/PMI) Computation

output

(+CSI offset)

**CSI Report (1915)**

Report AI/ML-based CSI with CQI

# FIG. 20

Receive CSI-related configuration — A05

Perform CSI measurements associated with each other — A10

Transmit a CSI report — A15

# FIG. 21

Transmit CSI-related configuration — B05

Receive a CSI report regarding CSI measurements associated with each other — B10

# FIG. 22

# FIG. 23

# FIG. 24

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 25

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

# FIG. 26

## INTERNATIONAL SEARCH REPORT

| International application No. |
|---|
| **PCT/KR2023/014861** |

| A. | CLASSIFICATION OF SUBJECT MATTER |
|---|---|
| | **H04B 7/06**(2006.01)i; **H04B 17/336**(2015.01)i; **G06N 20/00**(2019.01)i |

According to International Patent Classification (IPC) or to both national classification and IPC

| B. | FIELDS SEARCHED |
|---|---|

Minimum documentation searched (classification system followed by classification symbols)

H04B 7/06(2006.01); H04M 1/02(2006.01); H04W 72/08(2009.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AI/ML(artificial intelligence/machine learning), CSI(channel state information), 모델 (model), 측정(measurement)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2022-0124836 A1 (GUANGDONG OPPO MOBILE TELECOMMUNICATIONS CORP., LTD.) 21 April 2022 (2022-04-21)<br>See paragraphs [0031], [0041]-[0042] and [0047]. | 1-15 |
| Y | GOOGLE. On Enhancement of AI/ML based CSI. R1-2206196, 3GPP TSG RAN WG1 #110. Toulouse, France. 12 August 2022.<br>See sections 2.2-2.5 and 3; and figures 1-2. | 1-15 |
| Y | WO 2022-028351 A1 (MEDIATEK SINGAPORE PTE. LTD. et al.) 10 February 2022 (2022-02-10)<br>See paragraph [0031]; and figure 2. | 2-3 |
| Y | WO 2022-133866 A1 (HUAWEI TECHNOLOGIES CO., LTD.) 30 June 2022 (2022-06-30)<br>See paragraphs [0279] and [0282]. | 5 |
| A | ERICSSON. Discussion on general aspects of AI/ML framework. R1-2206885, 3GPP TSG RAN WG1 #110. Toulouse, France. 12 August 2022.<br>See section 2.3.5. | 1-15 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 January 2024** | **09 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/014861**

| Patent document cited in search report | | | Publication date (day/month/year) | Patent family member(s) | | | Publication date (day/month/year) |
|---|---|---|---|---|---|---|---|
| US | 2022-0124836 | A1 | 21 April 2022 | CN | 114128164 | A | 01 March 2022 |
| | | | | EP | 3979513 | A1 | 06 April 2022 |
| | | | | EP | 3979513 | A4 | 20 July 2022 |
| | | | | WO | 2021-016770 | A1 | 04 February 2021 |
| WO | 2022-028351 | A1 | 10 February 2022 | | None | | |
| WO | 2022-133866 | A1 | 30 June 2022 | CN | 116686278 | A | 01 September 2023 |
| | | | | EP | 4233303 | A1 | 30 August 2023 |
| | | | | US | 2023-0284139 | A1 | 07 September 2023 |

Form PCT/ISA/210 (patent family annex) (July 2022)